# EUROPEAN PATENT SPECIFICATION

(11) **EP 1 506 666 B1**
(45) Date of publication and mention of the grant of the patent: **16.10.2013**
(21) Application number: 03738928.5
(22) Date of filing: 15.05.2003
(51) Int. Cl.: G10L 13/027, H04M 3/493

(54) **DYNAMIC CONTENT GENERATION FOR VOICE MESSAGES**
DYNAMISCHE INHALTSERZEUGUNG FÜR SPRACHNACHRICHTEN
GENERATION DE CONTENU DYNAMIQUE DESTINEE A DES MESSAGES VOCAUX

(30) Priority: 15.05.2002 US 380273 P; 31.10.2002 US 284459
(43) Date of publication of application: 16.02.2005
(73) Proprietor: SAP AG, 69190 Walldorf (DE)
(72) Inventor: GILMORE, Jeffrey, A., Half Moon Bay, CA 94019 (US); BYRNE, William, J., Davis, CA 95616 (US); GARDELLA, Henry, William, Saratoga, CA 95070-3650 (US)
(74) Representative: Müller-Boré & Partner Patentanwälte
(86) International application number: PCT/US2003/015537
(87) International publication number: WO 2003/098905

(56) References cited:
- EP-A- 1 100 013
- WO-A-03/005340
- US-A- 6 067 559
- US-A1- 2002 054 090
- US-B1- 6 263 051

## Description

### TECHNICAL FIELD

This disclosure relates to interactive voice response systems that use speech recognition technology, and more particularly to dynamic content generation in script-based voice-enabled applications.

### BACKGROUND

Speech recognition technology is playing an increasingly important role in how users interact with businesses and computer systems. While Web and mobile business solutions provide major points of contact with customers, call centers still see heavy call volume. Automated systems for telephone access may be used to automate customer contact over telephony and thereby increase call center efficiency. Such systems typically employ voice-enabled applications that interact with a caller by vocally providing and requesting caller data in response to user inputs. Speech recognition may be used in these interactive voice response systems to recognize the spoken words of callers in addition, or as an alternative to, recognizing numbers inputted by the caller using the telephone keypad.

US 2002/0054090 A1 discloses a personalized Web view of content in a Web page, which is created for later access by users through diverse terminals having different types of processing and display capabilities. The system may include a voice transcoding architecture including a VoiceXML Interpreter, a GenerateVoiceViewList module, a user profile database, a transcoding engine and a user profile manager. When a user calls a special phone number from his telephone, a fixed caller identification VoiceXML dialogue is started. Once a user ID is obtained, list of Web views associated with that user is looked up (via GenerateVoiceViewList module) from the user profile database and a VoiceXML dialogue us generated that prompts the user to select between his recorded Web views. The user may make his selection via touch tone or spoken input. Once a user makes a choice, the VoiceXML interpreter passes the Web view information to the transcoding engine, which in turn queries the Web view execution engine to execute the Web view. The transcoding engine converts the clipped content into VoiceXML, utilizing the extra annotations supplied with the Web view.

US 6 263 051 B1 discloses a centralized voice service bureau, which accepts and authenticates requests to place automated telephone calls, for example, interactive voice broadcasts. The requests are then sent to Internet or other computer network and contain structure and content sufficient to drive a text-to-speech engine. The call requests are queued and processed by a call server that establishes a connection with a user and generates speech from the content of the call request.

EP 1 100 013 A2 discloses methods and systems for multi-modal browsing and implementation of a conversational markup language (CML), which is based on user interaction with any device which a user is employing to access any type of information. In a preferred embodiment the CML is a high level XML based language for representing "dialogs" or "conversations" the user will have with any computing device. An interaction may comprise for example visual based user interaction and speech based user interaction.

### SUMMARY

In one general aspect, a method for dynamically generating a voice message in an interactive voice response system comprises:
processing a voice script comprising one or more dynamic content generation commands, the processing comprising resolving each of the dynamic content generation commands in the voice script into one or more corresponding voice program instructions;
generating a dynamic voice message based on the processed voice script; and
presenting the dynamic voice message,

The resolving each of the dynamic content commands in the voice script comprises
processing a dynamic content generation command to identify a dynamic content generation script corresponding to the dynamic content generation command, the dynamic content generation script being a logic file that defines the conditions under which different prompt instructions or grammar instructions may be returned into the voice script;
dynamically processing the dynamic content generation script to generate one or more new dynamic content generation commands that are then processed in sequence, wherein the processing of a new dynamic content generation program includes building a corresponding voice program instruction corresponding to each of the new dynamic content commends that is returned to the voice script.

Implementations may include one or more of the following features. For example, processing the dynamic content command may include accessing the dynamic content generation script from a data store.

The voice program instruction may be a voice extensible markup language instruction or a speech application language tags instruction. The voice program instruction may be a prompt or grammar instruction.

Building the voice program instruction corresponding to the new dynamic content generation command may include building a universal resource locator of a voice file and positioning the universal resource locator of the voice file after a voice instruction tag or as the content of the voice instruction tag. The voice file may be a prompt file or a grammar file.

Building the voice program instruction may further include accessing a block of text from a file corresponding to an identifier parameter included in the new dynamic content generation command and positioning the block of text after the voice instruction tag or between the two voice instruction tags. Building the universal resource locator of the voice file may include accessing property values in a configuration file stored in a data store. The property values may include a base universal resource locator value, a file extension value, a format value, or a voice value.

Processing the dynamic content generation script may include retrieving information from a data store. Processing the dynamic content generation script may also include accessing backend systems to retrieve data used to generate the dynamic voice message. The dynamic content generation script may be written using a dynamic markup system. The dynamic markup system may be Java Server Pages, Practical Extraction and Report Language, Python, or Tool Command Language.

The dynamic content generation command may be used in a voice program written in a scripting language. The scripting language may be voice extensible markup language or speech application language tags. The dynamic voice message may include playing the voice message using an audio playback component of a voice gateway.

In another general aspect, an interactive voice response system comprises a data store that stores one or more dynamic content generation scripts; a voice application processor; and a voice gateway configure to present the voice message to a user.

The voice application processor comprises means adapted to process a voice script comprising one or more dynamic content generation commands, the processing comprising resolving each of the dynamic content generation commands in the voice script into one or more corresponding voice program instructions; means adapted to generate a dynamic voice message based on the processed voice script.

The means adapted to process the voice script is adapted to
receive a dynamic content generation command;
identify a dynamic content generation script corresponding to the dynamic content generation command, the dynamic content generation script being a logic file that defines the conditions under which different prompt instructions or grammar instructions may be returned into the voice script; retrieve the dynamic content generation script from the data store; and
dynamically process the dynamic content generation script to generate one or more new dynamic content generation commands that are then processed in sequence, wherein the processing of a new dynamic content generation program includes building a corresponding voice program instruction corresponding to each of the new dynamic content commends that is returned to the voice script.

Implementations may include one or more of the following features. For example, the interactive voice response system may further include a backend system that provides data used by the voice application processor to generate the voice message. The voice application processor may process the dynamic content generation script by accessing the backend system to retrieve data used to generate the voice message.

A method for dynamically generating one or more voice program instructions in a voice script code segment includes receiving a dynamic content instruction. The dynamic content instruction includes a dynamic content code that identifies the instruction as a dynamic content instruction and an identifier parameter. The dynamic content code is associated with one or more voice program instructions. The method includes identifying a dynamic content generation script based on the identifier parameter and processing the dynamic content generation script to generate one or more voice program instructions.

In another general aspect, a computer program product comprising a computer readable storage medium stores a dynamic content instruction for generating one or more voice program instructions in a voice script instruction set architecture. The dynamic content instruction is a part of the voice script instruction set. The dynamic content instruction includes a dynamic content code that identifies the instruction as a dynamic content instruction, the dynamic content instruction being associated with one or more voice program instructions; and an identifier parameter. The dynamic content instruction is processed by processing a dynamic content generation script corresponding to the identifier parameter, the dynamic content generation script being a logic file that defines the conditions under which different prompt instructions or grammar instructions may be returned into the voice script. The processing of the dynamic content generation script comprises processing the dynamic content generation script to generate one or more new dynamic content generation commands that are then processed in sequence, wherein the processing of a new dynamic content command includes building a corresponding voice program instruction corresponding to each of the new dynamic content commends that is returned to the voice script.

A method for dynamically generating one or more voice program instructions in a voice script code segment includes receiving a dynamic content instruction. The dynamic content instruction includes a dynamic content code that identifies the instruction as a dynamic content instruction and an identifier parameter. The dynamic content code is associated with one or more voice program instructions. The method includes identifying the dynamic content generation script based on the identifier parameter and determining whether to generate one or more voice program instructions based on the dynamic content generation script.

The details of one or more implementations are set forth in the accompanying drawings and the description below. Other features will be apparent from the description and drawings, and from the claims.

### DESCRIPTION OF DRAWINGS

Fig. 1 is an exemplary voice communications system.
Fig. 2 is a block diagram of a voice communications system.
Fig. 3 is a flowchart of a process for dynamically generating a voice script using dynamic content generation commands.
Fig. 4 is a flowchart of a process for building a voice program instruction corresponding to a dynamic content generation command.
Fig. 5 is an exemplary voice script that includes dynamic content generation commands.
Fig. 6 is a dynamic content generation script for introducing commands in an interactive voice response system.
Fig. 7 is a dynamic content generation script for playing an introduction in payroll interactive voice response system.
Fig. 8 is a dynamic content generation script for playing verbose introductions in an interactive voice response system.
Fig. 9 shows the script of Fig. 5 after processing all of the dynamic content generation commands and the corresponding audio output generated by the script.
Fig. 10 shows an alternate expansion of the script of Fig. 5 after processing all of the dynamic content generation commands and the corresponding audio output.
Fig. 11 is another dynamic content generation script.
Figs. 12-14 illustrate various audio scripts that may be generated by the script of Fig. 5.

Like reference symbols in the various drawings indicate like elements.

### DETAILED DESCRIPTION

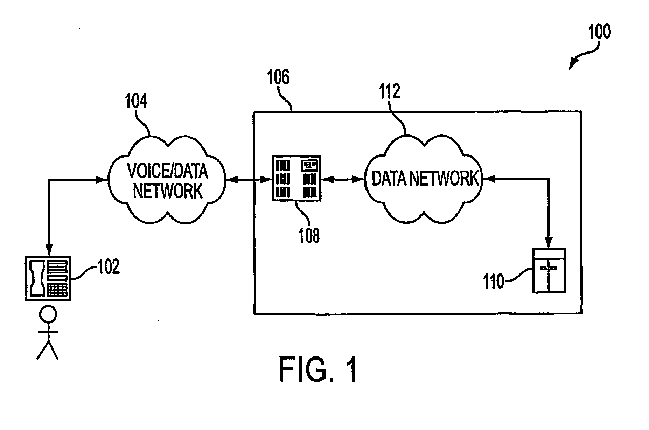

Referring to Fig. 1, a voice communications system 100 includes a voice communications device 102 connected to a voice or data network 104 that is, in turn, connected to an interactive voice response system 106.

The voice communications device 102 is a device able to interface with a user to transmit voice signals across a network such as, for example, a telephone, a cell phone, a voice-enabled personal digital assistant (PDA), or a voice-enabled computer.

The network 104 may include a circuit-switched voice network such as the public switched telephone network (PSTN), a packet-switched data network, or any other network able to carry voice. Data networks may include, for example, Internet protocol (IP)-based or asynchronous transfer mode (ATM)-based networks and may support voice using, for example, Voice-over-IP, Voice-over-ATM, or other comparable protocols used for voice data communications.

The interactive voice response system 106 includes a voice gateway 108 coupled to a voice application system 110 via a data network 112. Alternatively, the voice gateway 108 may be local to the voice application system 110 and connected directly to the voice application system 110.

The voice gateway 108 is a gateway that receives user calls from voice communications devices 102 via the network 104 and responds to the calls in accordance with a voice program. The voice program may be accessed from local memory within the voice gateway 108 or from the application system 110. In some implementations, the voice gateway 108 processes voice programs that are script-based voice applications. The voice program, therefore, may be a script written in a scripting language such as, for example, voice extensible markup language (VoiceXML) or speech application language tags (SALT).

The voice application system 110 includes a voice application server and all computer systems that interface and provide data to the voice application server. The voice application system 110 sends voice application programs or scripts to the voice gateway 108 for processing and receives, in return, user responses. The user responses are analyzed by the system 110 and new programs or scripts that correspond to the user responses may then be sent to the voice gateway 108 for processing.

The data network 112 may be implemented, for example, using a local area network (LAN) or a wide area network (WAN) compatible with standard network protocols (e.g., hypertext transport protocol [HTTP], transport control protocol/Internet protocol [TCP/IP], Ethernet) and capable of carrying packetized data.

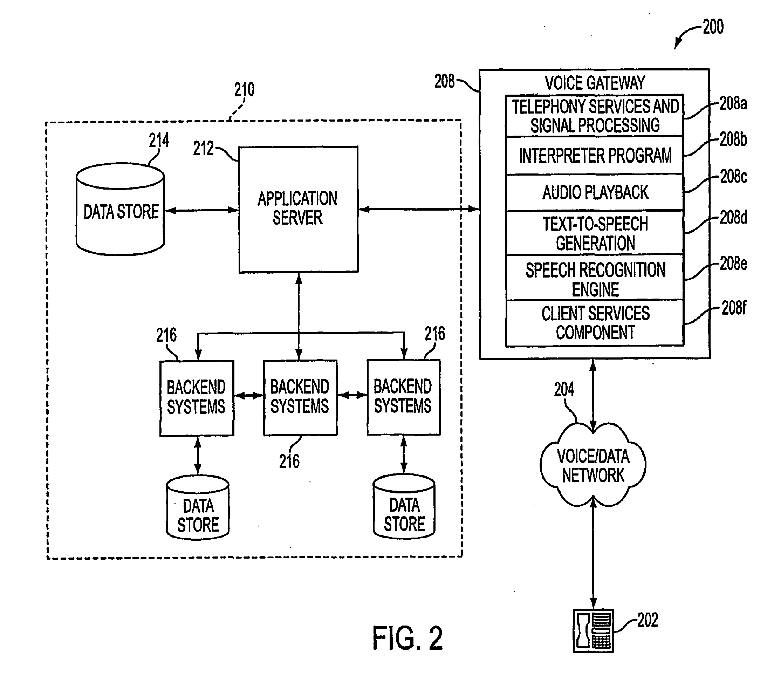

Fig. 2 shows a voice communications system 200 similar to the communications system 100 but illustrating in greater detail an implementation of the voice application system 110. A voice communications device 202, a network 204, a voice gateway 208, and a voice application system 210 are analogous to the communications device 102, the network 104, the voice gateway 108, and the voice application system 110, respectively, of communications system 100.

The voice gateway 208 includes, for example, a telephony services and signal processing component 208a, an interpreter program 208b, an audio playback component 208c, a text-to-speech generation component 208d, a speech recognition engine 208e, and a client services component 208f.

Incoming calls are answered by the telephony services and signal processing component 208a of the voice gateway 208. The voice gateway 208 is provisioned in a manner similar to an interactive voice response (IVR) system and is usually located "downstream" of a private branch exchange (PBX) or automatic call director (ACD). This configuration allows callers to request transfer to a live operator if they experience problems. The gateway 208 may also be located at the customer site in front of the PBX or ACD (to save having to buy more ports on the PBX or ACD), or at the premises of a dedicated application service provider (ASP).

The interpreter program 208b is responsible for retrieving and executing voice programs. Executing voice programs involves generating outgoing speech or prompts using the audio playback component 208c and the text-to-speech generation component 208d of the voice gateway 208 and listening to spoken responses from the caller using the speech recognition engine 208e. The speech recognition engine 208e is equipped with or has access to grammars that specify the expected caller responses to a given prompt. The prompts that are generated in response to the spoken input of the caller vary dynamically depending on the caller response and whether or not it is consistent with a grammar. In this manner, the voice gateway 208 is able to simulate a conversation with the caller.

The voice application system 210 includes an application server 212 that communicates with the voice gateway 208, a data store 214, and backend systems 216. The application server 212 provides the execution environment for voice applications. Each voice application may be a combination of, for example, java servlets, java server pages, other java code, and voice scripts such as VoiceXML scripts or SALT scripts. The application server 212 provides the voice gateway 208 with voice scripts to execute. The application code executed by the application server 212 coordinates which scripts to send to the voice gateway 208. The application server 212 frequently processes the scripts before sending the processed scripts to the voice gateway 208.

The application server 212 may communicate with the voice gateway 208 using any network protocols including HTTP, TCP/IP, UDP, and ATM. The application server 212 may be local to the voice gateway 208 as shown or may be located anywhere across a network accessible by the gateway 208.

The data store 214 is a storage device that stores files necessary for execution of the voice application. Such files typically include script files, prompt files, grammar files, and text-to-speech (TTS) text files.

Script files are text files that include a series of embedded tags. The tags indicate which part of the text file defines a prompt used to "speak" to the caller and which part defines a grammar used to "hear" and understand the spoken response of the caller. Script files also generally contain limited logic that controls the sequence and defines rules for how to respond to conditions, such as misunderstood speech or a lack of speech from the caller. The script files are processed by the interpreter program 208b of the voice gateway 208.

Prompt, grammar, and TTS text files are accessed by the interpreter program 208b while processing the script file. When executing a prompt instruction, the interpreter program 208b either accesses a prompt file that contains voice data that is directly "spoken" to the caller or, alternatively, accesses a TTS text file that is spoken to the user via the text-to-speech engine 208d of the voice gateway 208. Audio data stored in prompt files may be formatted in WAV or similar audio data formats. When executing a grammar instruction, the interpreter program 208b accesses grammar files that contain a specification of the various ways in which a caller might respond to a prompt. Grammar files may be in a custom format specific to the speech recognition engine 208e used or may be written, for example, in standard Java Grammar Specification Format (JGSF) or Speech Recognition Grammar Specification 1.0 extensible markup language (XML) or augmented Backus-Naur forms (ABNF).

The data store 214 may be external to or located inside the application server 212 or the voice gateway 208. Prompt and grammar files may be cached at the gateway 208 to decrease access time. The voice gateway 208 may also receive the prompt and grammar files from the data store 214 or from the application server 212 which obtains them from the data store 214. Alternatively, the voice gateway 208 may receive the prompt and grammar files from a completely different web server.

The voice gateway 208 receives script files from the application server 212 which obtains the files from the data store 214. The application server 212 may process the scripts prior to sending the processed scripts to the voice gateway 208.

The backend systems 216 include computing systems in the computing environment of the application server 212 that may be queried by the application server to obtain data as necessary while executing a voice application. Such data may include, for example, login information and customer data.

In typical operation, the voice gateway 208 retrieves the initial voice script from local memory and/or from the application server 212 and parses the script using the interpreter program 208b. The gateway 208 parses the script by searching and executing the voice-specific instructions within the script. For example, the first voice-specific instruction may be a prompt instruction. The prompt instruction may be executed either by accessing and playing an audio file specified by the prompt instruction or by employing the text-to-speech generation component 208d to translate and play text included in the prompt instruction.

The next voice-specific instruction in the script may be, for example, a grammar instruction. The interpreter program 208b of the gateway 208 processes the grammar instruction by handing off control to the speech-recognition engine 208e which tells the gateway 208 to pause and listen for spoken input from the caller.

Upon receiving spoken input from the caller, the speech recognition engine 208e determines whether the spoken input is consistent with the grammar specified by the grammar instruction. If the spoken input is consistent with the grammar, the script may execute a prompt instruction tailored to the input. If the spoken input is not consistent with the grammar, the script may execute a different prompt instruction that informs the caller that the system does not understand the caller.

The interpreter program 208b continues parsing and processing the script in this manner. When the script is completed and the necessary responses are collected from the caller, the interpreter 208b assembles them into a request that is sent to the application server 212. The application server 212 processes the request and may send another script, if necessary, to the gateway 208.

A dynamic content generation (DCG) command may be used in the voice scripts to significantly increase the ability of the scripts to dynamically change in response to different types of callers and in response to different caller inputs. DCG commands are inserted into the text of the scripts when the scripts are created, prior to storing them in data store 214. When the voice gateway 208 requests a script from the application server 212, the application server 212 accesses the script from the data store 214 and processes the script by resolving any DCG commands within the script into voice instructions (i.e., grammar or prompt instructions). The server 212 then sends the processed script to the voice gateway 208, and the voice gateway 208 presents the script to the caller, for example, as an audio message.

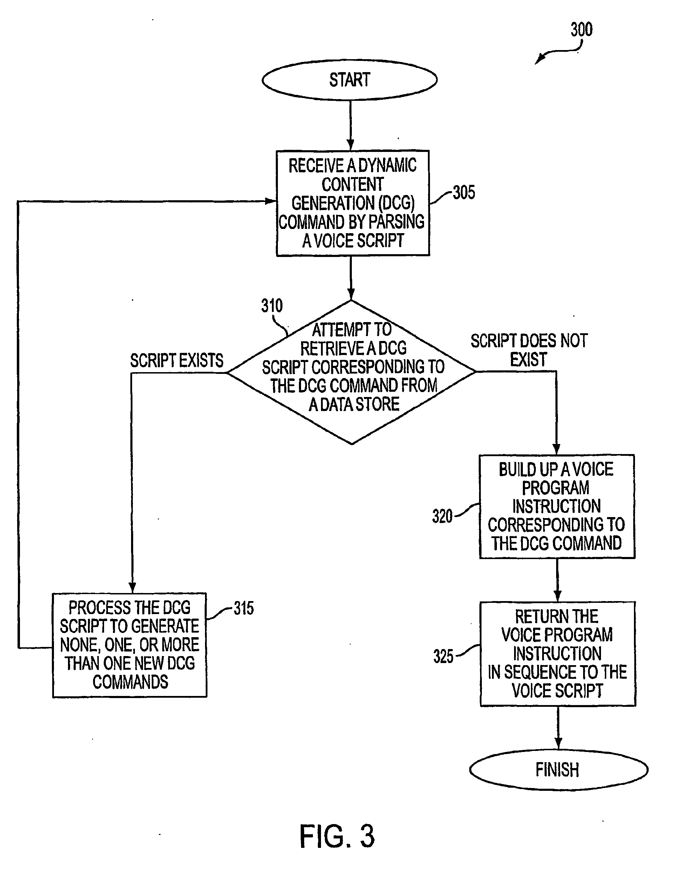

Fig. 3 shows a process 300 to dynamically generate a voice script or voice message using DCG commands. A voice gateway may be used to present the dynamically generated voice script or voice message to a caller. The operations of process 300 may be performed, for example, by the application server 212 which may then send the resulting dynamically generated voice script to the voice gateway 208 for presentation to the caller.

The process 300 includes receiving a DCG command (operation 305) by parsing a voice script that contains one or more DCG commands. The DCG command includes a dynamic content code and an identifier parameter. The dynamic content code identifies the command as either a DCG prompt command or a DCG grammar command. DCG prompt commands are ultimately converted into prompt instructions, and similarly, DCG grammar commands are ultimately converted into grammar instructions. DCG commands may, in certain circumstances, not resolve into any voice instructions. The identifier parameter links the DCG command to a DCG script or, if no DCG script exists, the identifier parameter links the DCG command to a prompt file or a grammar file.

For example, a DCG prompt command may be "smartPrompt name = 'command_intro.'" The code "smartPrompt" is the dynamic content code and identifies the DCG command as a DCG *prompt* command. The identifier parameter is designated by the string "name =" and has the value "command_intro."

The process 300 includes attempting to retrieve a DCG script corresponding to the DCG command from the data store 214 (operation 310). If the DCG script exists, it will be stored in a file identified by the identifier parameter of the DCG command. For example, if the identifier parameter is "command_intro" and the file is a Java ServerPages (JSP) file, the name of the file that the server 212 attempts to retrieve may be "command_intro.jsp." If such a file exists, the server 212 retrieves it and begins processing the DCG script (operation 315).

The process 300 includes processing the DCG script to generate none, one, or more than one new DCG commands (operation 315). DCG scripts are logic files that define the conditions under which different prompt instructions or grammar instructions may be returned into the voice script. The DCG scripts may be written, for example, using dynamic script markup systems and may access any objects, data, or methods stored in the application system 210. Examples of dynamic script markup systems include JSP/Java syntax, Practical Extraction and Report Language (PERL), Python, and Tool Command Language (TCL). The result of processing a DCG script (operation 315) is none, one, or more than one new DCG commands. Some of the new DCG commands may refer to other DCG scripts, and others may refer directly to prompt or grammar files.

If a new DCG command refers to another DCG script, the server 212 performs operations 305, 310, and 315 again; except this time the operations are performed for the new DCG command. A DCG script is, therefore, able to use DCG commands to recursively call other DCG scripts via recursive operations 305, 310, and 315. This recursive process provides voice application developers with the ability to generate very dynamic voice scripts/messages.

If a new DCG command does not refer to another DCG script, the server 212 attempts but fails to access a corresponding DCG script file, and, upon failing, a voice program instruction corresponding to the new DCG command is built (operation 320) and returned in sequence to the voice script (operation 325). Operations 320 and 325, thereby, completely resolve the new DCG command and convert it into a voice instruction that is returned to the voice script.

The process 300, therefore, may be used to resolve each DCG command in sequence, recursively evaluating DCG scripts as necessary until all DCG commands resolve into no commands or into DCG commands that refer to grammar or prompt files, rather than to DCG scripts. The DCG commands that refer to grammar or prompt files are converted into voice instructions that are returned to the voice script at the location of the original DCG command (via operations 320 and 325) in the order in which they are resolved.

The result of processing all of the DCG commands in the voice script is a voice script in which all of the DCG commands have been replaced by none, one, or more than one voice instructions. DCG scripts, thereby, allow a voice developer to create voice scripts that vary in content on-the-fly depending on any kind of selection logic, calculations, or backend access used to decide which voice instructions to return to the voice script. For example, if the scripts use JSP technology, the selection logic may include any operators, variables, or method calls that are available in the JSP/Servlet environment where the DCG command is executed. Furthermore, by separating out the logic that selects the prompt or grammar from the voice script and placing it in the DCG script files, the voice scripts may be easier to read and maintain.

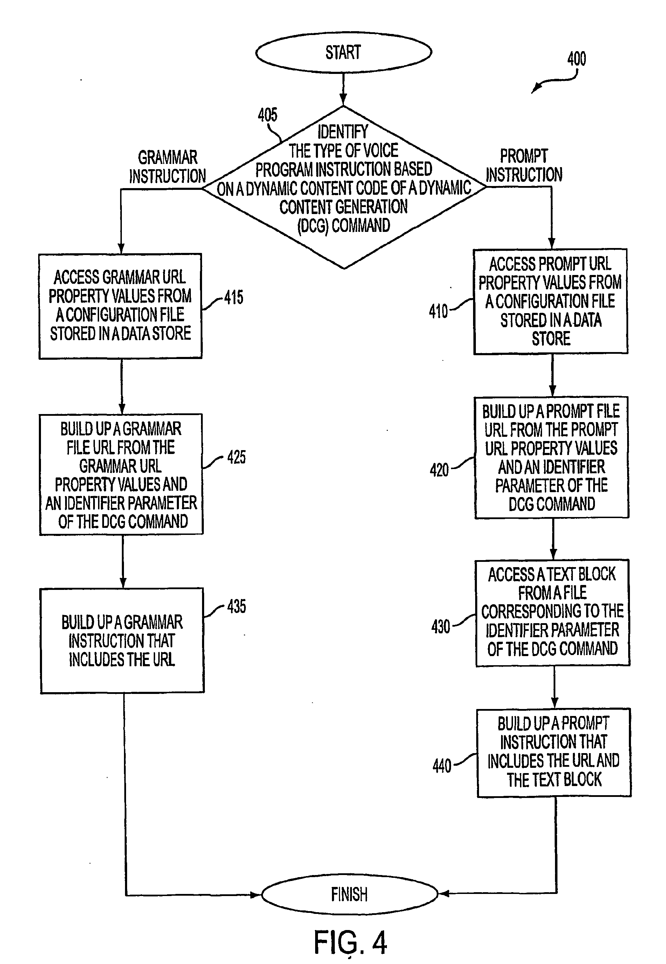

Fig. 4 shows a process 400 that may be used to build a voice program instruction corresponding to a DCG command. Process 400 may be used to implement operation 320 of process 300.

Process 400 includes identifying the type of voice program instruction (or voice instruction) based on the dynamic content code of a DCG command (operation 405). For example, the dynamic content code *"*smart*Prompt"* may indicate that the voice instruction produced by the DCG command is a prompt instruction. In VoiceXML, this may translate to a voice instruction delimited by "audio" tags. Alternatively, the dynamic content code *"*smart*Grammar"* may indicate that the voice instruction produced by the DCG command is a grammar instruction. In VoiceXML, this may translate to a voice instruction designated by a "grammar" tag.

Voice instructions typically include a universal resource locator (URL) positioned after a voice instruction tag (e.g., a grammar tag) or between two voice instruction tags (e.g., audio tags). The URL is the path of the voice file (i.e., a grammar or prompt file) that will be accessed when executing the voice instruction. A flexible way to create the URL is to build it up through the use of a configuration file. A new configuration file may be created or an existing configuration file may be modified to store values for properties that may be used to build the URL.

Process 400 includes accessing prompt or grammar URL property values from a configuration file stored in a data store (operations 410 and 415, respectively) and building a prompt or grammar file URL from the property values and the identifier parameter of the DCG command (operations 420 and 425, respectively).

One way to build a prompt or grammar file URL is to concatenate the property values in the configuration file in a predetermined order with the identifier parameter of the DCG command. For example, the server 212 may receive the DCG command "smartPrompt name = command_intro" and the property values for a prompt instruction stored in the configuration file may be those shown in Table 1.

| **Table 1** |
|---|
| **Properties:** |
| Prompt.baseURL = prompts |
| Prompt.extension = wav |
| Prompt.format = 8_8_ulaw_wav |
| Language = en_us |
| Prompt.voice = chris |

The corresponding URL may then be built up by concatenating these property values with the identifier parameter of the DCG command in accordance with a predetermined URL format. For example, the URL format may be:
"<PromptbaseURL>/<Promptformat>/<Language>/<Promptvoice>/<identifier parameter>.<promptextension>."

The resulting URL is then:
"prompts/8_8_ulaw_wav/en_us/chris/command_intro.wav."

Process 400 includes accessing a text block from a file corresponding to the identifier parameter of the DCG command (operation 430). Prompt instructions supported by scripting languages such as VoiceXML may include a block of text within the instruction (e.g., between the audio tags). This block of text is "spoken" by the TTS engine of the gateway 208 when the gateway 208 is unable to access a prompt file corresponding to the URL specified by the prompt instruction. The server 212 may insert a block of text into the voice instruction by accessing a text file that corresponds to the DCG command. The text file may be identified using the identifier parameter of the DCG command. For example, the server 212 may look for a text file named "command_intro.txt" when processing the "smartPrompt name = command_intro" command. That text file may store, for example, the following text: "This is the text of the command." In most cases, the block of text will not be spoken since a prompt file exists. However, the use of alternate blocks of text in the voice instruction does allow for a fully internationalized TTS-based interface to be implemented for cases where TTS is judged to be of sufficient quality for a particular application.

Process 400 includes building a prompt or grammar instruction that includes the URL (operations 440 and 435, respectively). When building a grammar instruction, the server 212 builds the instruction using the appropriate voice instruction tag or tags that identify the instruction as a grammar instruction and using the URL built up in operation 425. When building a prompt instruction, the server 212 builds the instruction using the appropriate voice instruction tag or tags that identify the instruction as a prompt instruction and using the URL built up in operation 420. Furthermore, the server 212 includes in the prompt instruction the block of text accessed in operation 430. For example, if the scripting language is VoiceXML, the resulting voice instruction that is built up corresponding to the DCG command "smartPrompt name = command_intro" is:
"<audio src = "prompts/8_8_ulaw_wav/en_us/chris/command_intro.wav" > This is the text of the command </audio>."

Generating voice instructions using process 400 removes the need to predefine an entry for every prompt and grammar and thereby makes application development simpler and more reliable. Furthermore, through the use of property values, process 400 automatically handles basic internationalization, format selection, and voice selection.

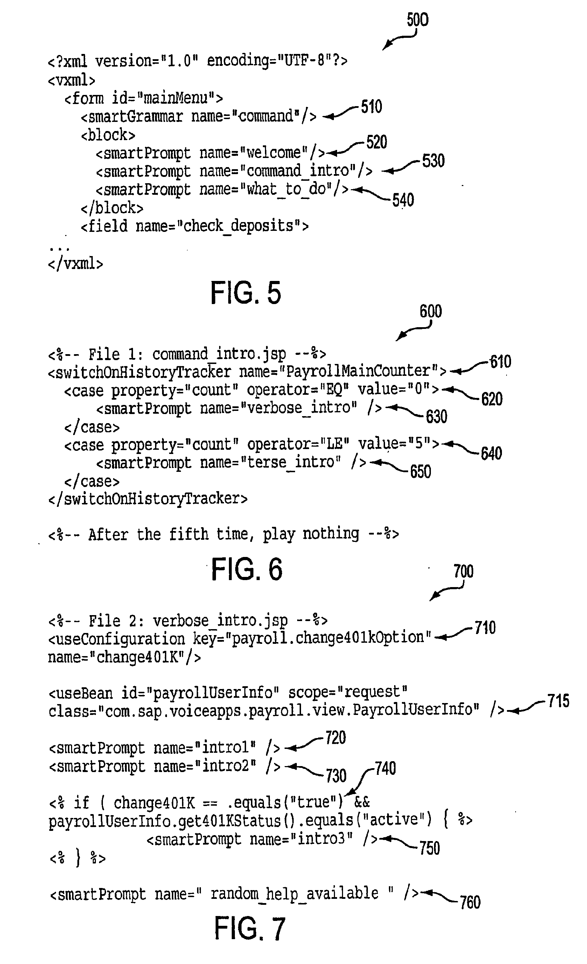

Fig. 5 shows an exemplary VoiceXML voice script 500 using Java ServerPages technology that may be used by the voice application system 210 to generate a dynamic VoiceXML, script. The dynamic VoiceXML script may be converted into a dynamic voice message by the voice gateway 208 and presented to a caller.

The application server 212 may retrieve the script from a data store 214 and may process the script by identifying the DCG commands within the script and processing each DCG command individually in accordance with processes 300 and 400.

The voice script 500 includes four DCG commands 510-540. DCG command 530 is the only command that is linked to a DCG script. DCG command 510 is linked to a grammar file, and DCG commands 520 and 540 are linked to prompt files. The grammar file is named "command.grxml." The names of the prompt files and their corresponding prompts are listed in Table 2 below:

| **Table 2** | |
|---|---|
| **Prompt File** | **Prompt** |
| welcome.wav | Hi, welcome to BigCorp Payroll. |
| intro1.wav | Since this is your first time calling, let me give you a quick introduction. This service allows you to conveniently access a variety of payroll functions- using only your voice. If you haven't used speech recognition before, don't worry- it's easy. Just speak naturally! There's no need to speak more slowly or louder than usual... OK, let's get started. |
| intro2.wav | You can say PAYCHECK HISTORY, VACATION BALANCE, or ADJUST MY W4. |
| intro3.wav | To adjust your retirement withholding, say 401K PLAN. |
| help_available_1.wav | If you ever get stuck, just say HELP. |
| help_available_2.wav | For a list of choices, say HELP at any time. |
| help_available_3.wav | Say HELP at any time to hear your options. |
| what_to_do.wav | What would you like to do? |

The DCG script file, the grammar file and the prompt files listed above may be stored in the data store 214. Furthermore, the data store 214 may also store TTS text files that contain text for each of the above listed prompts. The TTS text files may be stored under the same name as the corresponding prompt files with the exception that a ".txt" extension replaces the ".wav" extension.

After accessing the voice script from the data store 214, the application server receives the first DCG command 510 in the voice script (operation 305). The DCG command 510 includes the dynamic content code "smartGrammar" and the identifier parameter "command." The server 212 attempts to retrieve a DCG script that corresponds to the DCG command 510 by accessing a DCG script file named "command.jsp" from the data store 214 (operation 310). The script file named "command.jsp," however, does not exist because the DCG command 510 is not linked to a DCG script. The server 212 is, therefore, unable to access a script with that name and, upon failing to access such a script, proceeds to build a voice instruction corresponding to the DCG command 510 (operation 320).

The server 212 builds up a voice instruction using process 400. The dynamic content code of DCG command 510 indicates that the voice instruction should be a grammar instruction and should, therefore, be designated by a grammar tag (operation 405). The server 212 accesses URL property values located in a configuration file that is stored in data store 214 (operation 415). The URL property values and URL format for the grammar DCG command may be:

| **Table 3** |
|---|
| **Properties:** |
| Grammar.baseURL = grammars |
| Grammar.extension = .grxml |
| Grammar.format=w3c_xml |
| Language = en_us |
| |

| **URL Format:** |
|---|
| <GrammarbaseURL>/<Grammarformat>/<Language>/<identifierparameter>.<Grammarextension> |

The server 212 builds up the grammar file URL from the property values and the identifier parameter "command" of the DCG instruction (operation 425). The resulting URL is:
"grammars/w3c_xml/en_us/command.grxml"

The grammar instruction is then built using the URL (operation 435):
"<grammar src= "grammars/w3c_xml/en_us/command.grxml">h."

The server 212 returns this voice instruction into the voice script 500 in place of DCG command 510 (operation 325). The server 212 then proceeds to the next DCG command in the voice script 500.

The server 212 receives the second DCG command 520 (operation 305) and attempts to find a corresponding DCG script named "welcome.jsp" (operation 310). The script file named "welcome.jsp," however, does not exist because the DCG command 520 is not linked to a DCG script. The server 212 proceeds to build a voice instruction (operation 320) using process 400. The identifier code is "smart*Prompt*" and the voice instruction is, therefore, a prompt instruction. Assuming the prompt URL property values are the same as before, the resulting prompt instruction is:
"<audio src= "prompts/8_8_ulaw_wav/en_us/chris/welcome.wav"> Hi, welcome to BigCorp Payroll. </audio>."

The server 212 returns this voice instruction into the voice script 500 in place of the DCG command 520 (operation 325). The server 212 then proceeds to the next DCG command in the voice script 500.

The server 212 receives the third DCG command 530 (operation 305), attempts to find a corresponding DCG script named "command_intro.jsp" (operation 310), and successfully retrieves the script 600 shown in Fig. 6. The server 212 then processes the script 600 (operation 315).

The script 600 checks the value of a history tracker (PayrollMainCounter, line 610). The history tracker is a code module that keeps track of the number of times that a caller has accessed a system, such as, for example, the system 210. The script 600 provides a verbose introduction the first time the caller accesses the system 210, a terse introduction on the second through fifth visits, and no introduction on subsequent visits.

Specifically, if the value of the history tracker is zero (line 620), a DCG command 630 "smartPrompt name = 'verbose_intro"' is executed. If the value of the history tracker is less than five (line 640), a DCG command 650 "smartPrompt name = 'terse_intro'" is executed. If the value of the history tracker is five or more, no DCG command is executed. Both of the DCG commands 630 and 650 in DCG script 600 refer to DCG scripts rather than to prompt files. The value of the history tracker, therefore, determines which new DCG command results from server 212 processing DCG script 600.

If the history tracker value is zero, the resulting new DCG command is DCG command 630. The application server 212 receives DCG command 630 (operation 305), attempts to retrieve a DCG script named "verbose_intro.jsp" (operation 310), and successfully retrieves the script 700 shown in Fig. 7. The server 212 then processes the script 700 (operation 315).

The script 700 plays two introduction prompts and then checks whether the application should play a third prompt that offers the choice of changing 401(k) options. The application plays this third prompt based on two different values. The first value is a global configuration setting named "change401kOption" set in the configuration file that indicates whether the 401(k) option is enabled for *any* callers (line 710). The second value is a setting retrieved from the backend systems 216 which indicates whether the *current caller* is a 401(k) contributor (line 715). If the "change401kOption" value is set to "true" and the current caller is a 401k participant, the third introduction prompt is played (line 760). Script 700 ends by playing a random help prompt.

Specifically, the script 700 starts by invoking a Java component that accesses backend systems 216 and allows the script 700 to request information about the current caller's payroll (line 715).

DCG command 720 is then resolved by the server 212 using process 300. Since the DCG command 720 does not refer to another DCG script, the DCG command 720 may be converted into a prompt instruction and returned to the voice script 500. Specifically, operations 305, 310, 320, and 325 of process 300 are executed by the server 212. Operation 320 is executed using process 400. The resulting voice instruction for DCG command 720 is:
"<audio src = "prompts/8_8_ulaw_wav/en_us/chris/intro1.wav"> Since this is your first time calling, let me give you a quick introduction. This service allows you to conveniently access a variety of payroll functions- using only your voice. If you haven't used speech recognition before, don't worry- it's easy. Just speak naturally! There's no need to speak more slowly or louder than usual... OK, let's get started. </audio>."
This voice instruction is returned to the voice script 500 at the location of DCG command 530.

Similarly, DCG command 730 does not refer to a DCG script and is, therefore, resolved by server 212 into the following voice instruction:
"<audio src = "prompts/8_8_ulaw_wav/en_us/chris/intro2.wav"> You can say PAYCHECK HISTORY, VACATION BALANCE, or ADJUST MY W4. </audio>."
This voice instruction is also returned to the voice script 500 and inserted at the location of DCG command 530. Because DCG command 730 is resolved after DCG command 720, the voice instruction corresponding to DCG command 730 is inserted into the script after the voice instruction corresponding to DCG command 720.

The script 700 then checks whether the value named "change401k" is set to true and invokes the method "get401Kstatus" to determine whether the current caller participates in 401(k) payroll deductions (line 740). If the value of "change401k" is set to true and the current caller participates in 401(k) payroll deductions, DCG command 750 is executed. DCG command 750 does not refer to a DCG script, and is, therefore, resolved by server 212 into the following:
"<audio src ="prompts/8_8_ulaw_wav/en_us/chris/intro3.wav"> To adjust your retirement withholding, say 401K PLAN. <audio>."
This voice instruction is returned to the voice script 500 and inserted at the location of DCG command 530 after the inserted voice instructions corresponding to DCG commands 730 and 740. If the value named "change401k" is not set to true, however, no DCG command is executed and no voice instruction is inserted.

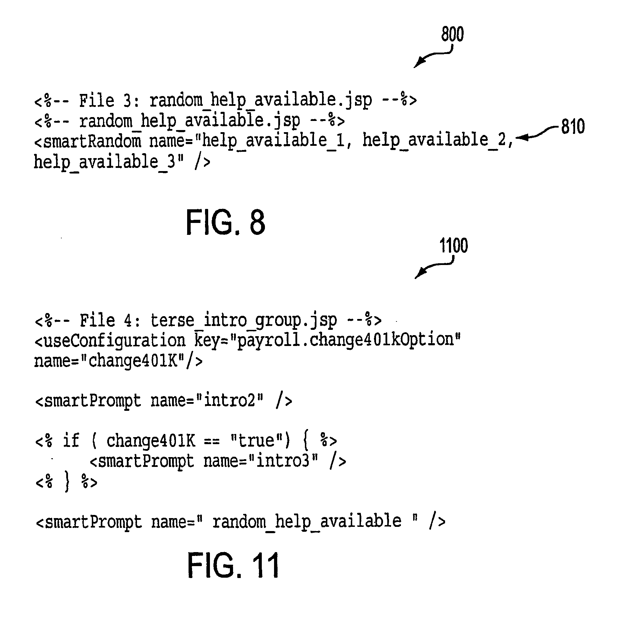

Script 700 concludes with a DCG command 760 that resolves into a random help prompt instruction. DCG command 760 refers to a DCG script named "random_help_available.jsp" 800 shown in Fig. 8. The script 800 executes a function known as "smartRandom" (line 810) that randomly returns one of three possible prompt instructions. The smartRandom function is used to bring a bit of variety to the interface and to relieve some of the artificiality. The smartRandom function ensures that no entry is repeated until all entries have been selected once during the session. This avoids the possibility of hearing the same choice twice in a row. The prompt instruction built by the smartRandom function is returned to the voice script 500 and inserted at the location of DCG command 530 after the inserted voice instructions corresponding to DCG commands 730, 740, and 750.

After script 800 is processed, the server 212 returns to script 700 and continues processing script 700 from where it left off. Script 700, however, has no more operations after DCG command 760 and, therefore, the server 212 returns to script 600 and continues processing script 600 from where it left off. Similarly, because the history tracker was set to zero, script 600 has no more operations after DCG command 630 and, therefore, server 212 returns to script 500 and continues processing script 500 from where it left off. Script 500, however, does have another operation to be executed by the server 212 after DCG command 530. Specifically, DCG command 540 is resolved.

DCG command 540 does not refer to a DCG script and, therefore, server 212 may resolve the command by executing operations 305, 310, 320, and 325 of process 300. Operation 320 may be executed using process 400. The resulting voice instruction is:
"<audio src "not"prompts/8_8_ulaw_wav/en_us/chris/what_to_do.wav"> What would you like to do? </audio>."
This voice instruction is inserted after all of the voice instructions corresponding to DCG command 530.

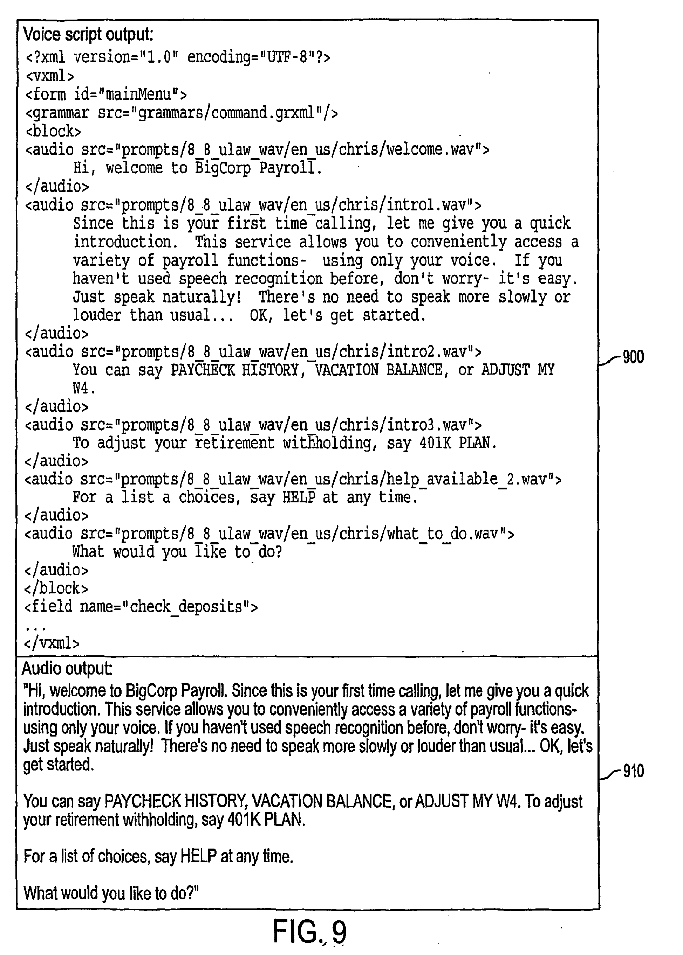

After resolving DCG command 540, the server 212 is done processing the voice script 500. The server 212 then sends the processed voice script (i.e., the dynamically generated voice script) to the gateway 208. The processed voice script 900 and the associated audio output 910 heard by the caller are shown in Fig. 9. The processed voice script 900 corresponds to the voice script 500 when the caller has accessed the system for the first time (i.e., payrollMainCounter=0) and the caller has a 401(k) plan that may be changed (i.e., payroll.change 401Koption =true). As shown in Fig. 9, all of the DCG commands 510, 520, 530, and 540 have been resolved into voice instructions.

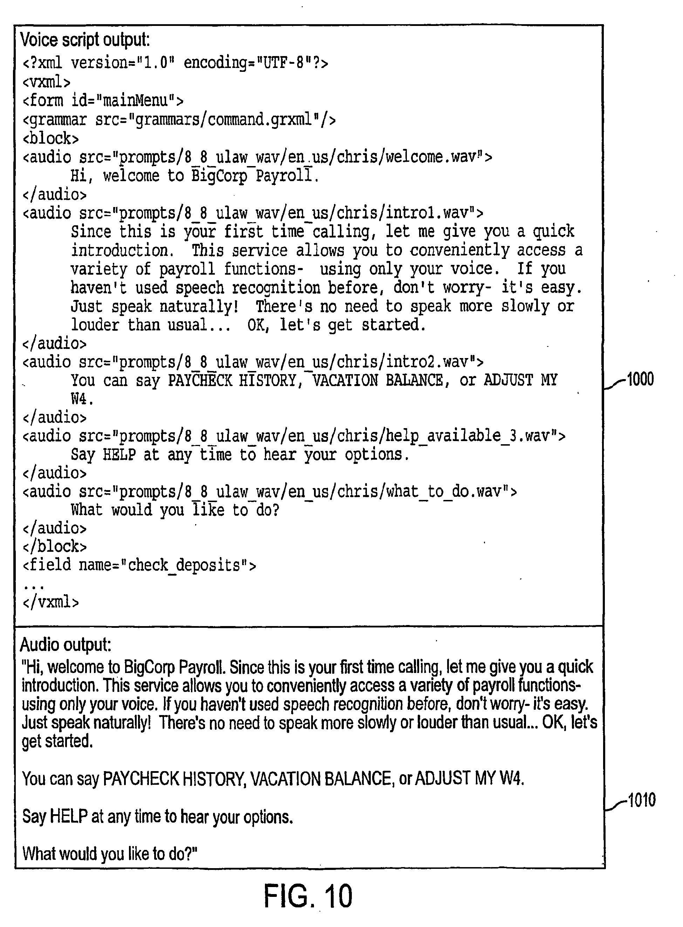

Fig. 10 is similar to Fig. 9 but shows a processed voice script 1000 and associated audio output 1010 that correspond to when the caller has accessed the system for the first time (i.e., payrollMainCounter =0) and the caller does not have a 401 (k) plan that may be changed (i.e., payroll.change 401kOption=false). Processes 300 and 400 may be used to generate processed voice script 1000 in an analogous manner as discussed above to generate processed voice script 900 from voice script 500.

Fig. 11 shows a DCG script file named "terse_intro_group.jsp" 1100 Script file 1100 is invoked when processing script file 600 if the caller has accessed the system between two and five times (line 640). In this case, DCG command 650 rather than DCG command 630 is resolved by server 212. DCG command 650 refers to script file 1100 and is resolved in accordance with processes 300 and 400 in an analogous manner as that used to resolve DCG command 630. Script 1100 skips the prompt instruction that plays intro 1, includes the prompt instruction that plays intro 2, and conditionally includes the prompt instruction that plays intro 3 (depending on the payroll.change401kOption setting in the configuration file). Script 1100 further includes the help prompt instruction that is generated randomly.

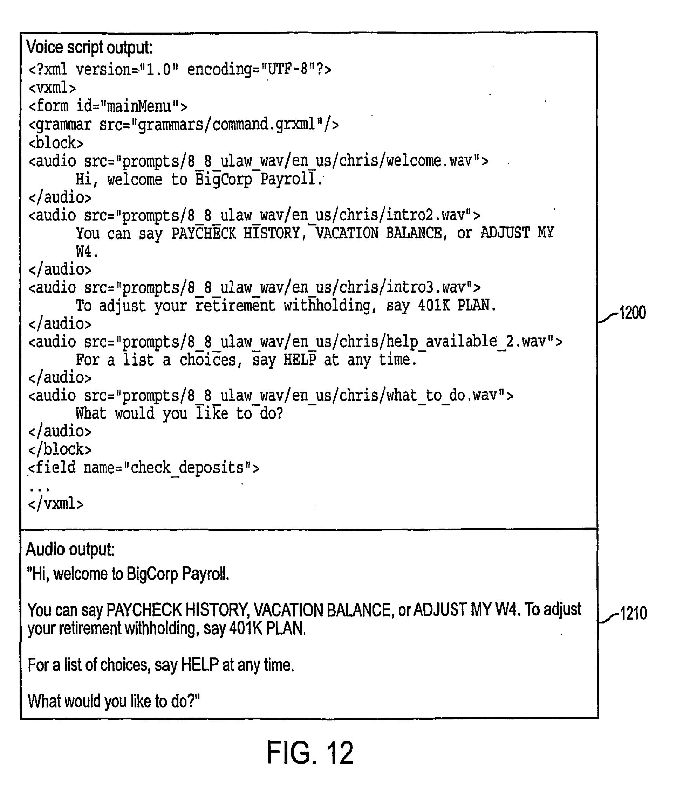

Fig. 12 is similar to Fig. 9 but shows a processed script 1200 and associated audio output 1210 that correspond to when the caller has accessed the system two times (i.e., payrollMainCounter=2) and the caller has a 401 (k) plan that may be changed (i.e., payroll.change401kOption=true). Processes 300 and 400 are used to generate processed script 1200 in an analogous manner as discussed above to generate processed voice script 900 from voice script 500. Script file 1100 is invoked when generating processed script 1200.

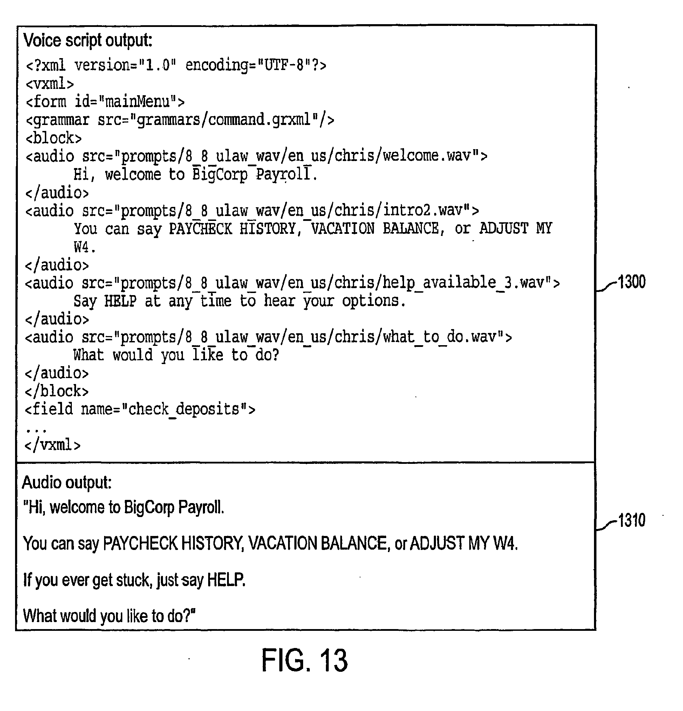

Fig. 13 is similar to Fig. 12 but shows a processed script 1300 and associated audio output 1310 that correspond to when the caller has accessed the system two times (i.e., payrollMainCounter =2) and the caller has a 401 (k) plan that may not be changed (i.e., payroll.change401kOption=false).

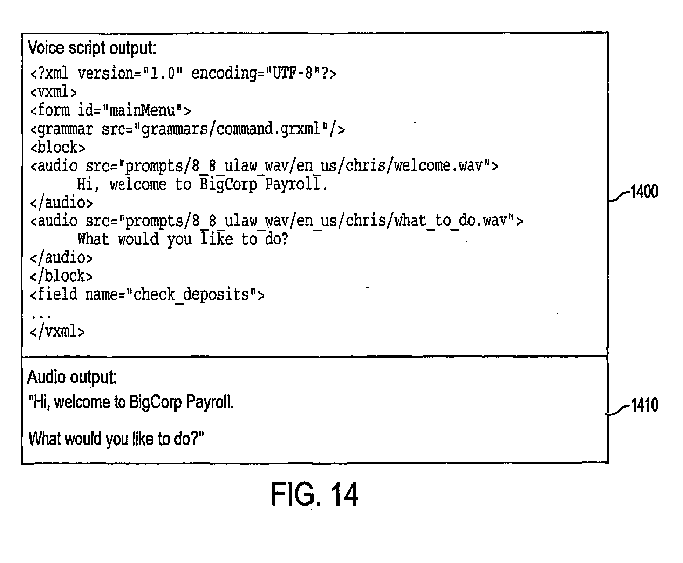

Fig. 14 shows a processed script 1400 and associated audio output 1410 that correspond to when the caller has accessed the system six times (i.e., payrollMainCounter=2) and the caller has a 401(k) plan that may be changed (i.e., payroll.change 401kOption= true). When the caller has accessed the system six times, DCF command 530 does not resolve into a prompt or grammar instruction. No introduction to the system is, therefore, provided since the caller is assumed to already know the system.

As shown in Figs. 5-14, a single voice script that contains DCG commands may be used to dynamically generate any one of five different voice scripts. The script that is ultimately generated and presented as a voice message to the caller is determined based on the system's knowledge of the caller. In this example, the system's knowledge included: (1) the number of times that the caller has accessed the system and (2) whether the caller has a 401(k) plan that may be changed using the system. A caller perceives one of five audio outputs 910, 1010, 1210, 1310, and 1410 depending on the values of these two pieces of caller information. The result is an audio output that seems less artificial to callers because it is specifically tailored to them. The use of the random prompt DCG command further augments the natural feel of the interface by providing a natural sounding variability to the prompts.

Examples of kinds of functions that are desirable in voice applications and may be easily implemented using DCG commands include: playing a group of prompts, playing a random prompt, and selecting a prompt or grammar based on external criteria.

A group of prompts may be played by including in the voice script a single DCG command that refers to a DCG script that returns multiple prompt instructions. For example, the command "smartPrompt name= 'main_tutorial'" could play a series of prompts that make up a tutorial. If a new feature is added to the system, a new prompt may be inserted into the tutorial by editing the properties of the DCG script "main_tutorial.jsp". This feature may also be useful for internationalization when language differences require different prompt structures.

A random prompt may be selected at random from a group of prompts by including in the voice script a single DCG command that refers to a DCG script that includes a randomization function. An example of such a random prompt DCG command is DCG command 760 discussed above in reference to Fig. 7. DCG command 760 was used to generate different variations of the prompt "say help at anytime to hear your options." Another example of a useful random prompt DCG command is a DCG command that generates different variations of the prompt "what do you want to do now?" Random prompt DCG commands may be programmed to not repeat prompts that were previously randomly generated in the same call. Random prompt DCG commands thereby allow designers to introduce variations in wording or intonation that may greatly improve the natural feel of the interface.
A prompt or grammar may be selected based on an external criteria by including in the voice script a single DCG command that refers to a DCG script that provides a simple rule-matching function based on external criteria. Such criteria may be based on simple data like time of day, day, or week, or may be based on more sophisticated data like the number of times the caller has accessed a system (e.g., kept track of by a history tracker like the one discussed above in reference to Fig. 6). For example, the DCG command "smartPrompt name= 'greeting'" might generate the prompt "Good Morning," "Good Afternoon," or "Good Evening" based on the time of day retrieved from the system clock.

A DCG command may generate a different prompt or group of prompts based on the current value of a counter or configuration switch stored in the data store 214 or in the backend systems 216. As discussed above in reference to Figs. 5-14, the counter "payrollMaincounter" and the configuration switch "payroll.change401kOption" were used to dynamically generate different prompts.

A DCG command may also be used to enable and disable both prompts and grammars based on configuration switches stored in the data store 214 or in backend systems 216. For example, a configuration switch in a caller's configuration file might allow a customer to enable or disable the need for a passcode in addition to their PIN when logging in. If the switch is enabled (i.e., set to true), the DCG command invokes a DCG script that generates prompts and grammars that ask and hear the caller's passcode and PIN. If, however, the configuration switch is disabled, the DCG command only generates prompts and grammars that ask and hear the caller's PIN.

A number of implementations have been described. Nevertheless, it will be understood that various modifications may be made without departing from the scope of the invention. Accordingly, other implementations are within the scope of the following claims.

## Claims

1. A method (300) for dynamically generating a voice message in an interactive voice response system (106), the method comprising:
processing a voice script (500) comprising one or more dynamic content generation commands (510-540), the processing comprising resolving each of the dynamic content generation commands (510-540) in the voice script (500) into one or more corresponding voice program instructions;
generating a dynamic voice message (910) based on the processed voice script (900; 1000); and
presenting the dynamic voice message (910),
said method being **characterized in that** the resolving of the dynamic content generation commands in the voice script (500) comprises
processing a dynamic content generation command (510-540) to identify a dynamic content generation script (600) corresponding to the dynamic content generation command (510-540), the dynamic content generation script (600) being a logic file that defines the conditions under which different prompt instructions or grammar instructions may be returned into the voice script (500);
dynamically processing (315) the dynamic content generation script (600) to generate one or more new dynamic content generation commands (610-650) that are then processed in sequence, wherein the processing of a new dynamic content generation command (610-650) includes building a corresponding voice program instruction corresponding to each of the new dynamic content commands (610-650) that are returned to the voice script (500).

2. The method (300) of claim 1 wherein processing the dynamic content generation command (510-540) includes accessing the dynamic content generation script (600) from a data store (214).

3. The method (300) of claim 1 wherein the voice program instruction comprises one of a voice extensible markup language instruction, a speech application language tags instruction, a prompt instruction, and a grammar instruction.

4. The method (300) of claim 1 wherein building the voice program instruction corresponding to the new dynamic content generation command (610-650) includes building (420, 425) a universal resource locator of a voice file and positioning the universal resource locator of the voice file after a voice instruction tag or between two voice instruction tags.

5. The method (300) of claim 5 wherein the voice file is a prompt file or a grammar file.

6. The method (300) of claim 4 wherein building the voice program instruction further includes accessing (430) a block of text from a file corresponding to an identifier parameter included in the new dynamic content generation command (610-650) and positioning the block of text after the voice instruction tag or between the two voice instruction tags.

7. The method (300) of claim 4 wherein building the universal resource locator of the voice file includes accessing (410, 415) property values in a configuration file stored in a data store (214).

8. The method (300) of claim 7 wherein the property values include a base universal resource locator value, a file extension value, a format value, a language value, or a voice value.

9. The method (300) of claim 7 wherein building the universal resource locator includes concatenating the property values in a predetermined order with an identifier parameter included in the new dynamic content generation command (610-650).

10. The method (300) of claim 1 wherein processing the dynamic content generation script includes one of retrieving information from a data store (214) or accessing backend systems to retrieve data used to generate the dynamic voice message.

11. The method (300) of claim 1 wherein the dynamic content generation script is written in a dynamic markup system.

12. The method (300) of claim 11 wherein the dynamic markup system is Java Server Pages, Practical Extraction and Report Language, Python, or Tool Command Language.

13. The method (300) of claim 1 wherein the dynamic content generation command (510-540) is used in a voice program written in a scripting language.

14. The method (300) of claim 13 wherein the scripting language is one of voice extensible markup language or speech application language tags.

15. The method (300) of claim 13 wherein presenting the dynamic voice message includes playing the voice message using an audio playback component of a voice gateway (108; 208).

16. An interactive voice response system (106) comprising:
a data store (214) that stores one or more dynamic content generation scripts;
a voice application processor comprising:
means adapted to process a voice script (500) comprising one or more dynamic content generation commands (510-540), the processing comprising resolving each of the dynamic content generation commands (510-540) in the voice script (500) into one or more corresponding voice program instructions;
means adapted to generate a dynamic voice message (910) based on the processed voice script (900; 1000); and
a voice gateway (108; 208) configured to present the voice message (910) to a user,
said interactive voice response system (106) is **characterized in that** the means adapted to process the voice script (500) is adapted to
receive a dynamic content generation command (510-540);
identify a dynamic content generation script (600) corresponding to the dynamic content generation command (510-540), the dynamic content generation script (600) being a logic file that defines the conditions under which different prompt instructions or grammar instructions may be returned into the voice script (500);
retrieve the dynamic content generation script from the data store (214); and
dynamically process the dynamic content generation script (600) to generate one or more new dynamic content generation commands (610-650) that are then processed in sequence, wherein the processing of a new dynamic content generation command (610-650) includes building a corresponding voice program instruction corresponding to each of the new dynamic content commends (610-650) that is returned to the voice script (500).

17. The system of claim 16 further comprising a backend system configured to provide data used by the voice application processor to generate the voice message (910).

18. The system of claim 17 wherein the voice application processor is configured to process the dynamic content generation script (600) by accessing the backend system to retrieve data used to generate the voice message (910).

19. The system of claim 16 wherein the voice program instruction is one of a voice extensible markup language instruction, a speech application language tags instruction, a prompt instruction, and a grammar instruction.

20. The system of claim 16 wherein the voice application processor is configured to build the voice program instruction by building (420, 425) a universal resource locator of a voice file and positioning the universal resource locator of the voice file after a voice instruction tag or between two voice instruction tags.

21. The system of claim 20 wherein the voice file is a prompt file or a grammar file.

22. The system of claim 21 wherein the voice application processor is configured to build the voice program instruction by also accessing (430) a block of text from a file corresponding to an identifier parameter included in the new dynamic content generation command (610-650) and positioning the block of text after the voice instruction tag or between the two voice instruction tags.

23. The system of claim 20 wherein the voice application processor is configured to build the universal resource locator of the voice file by accessing (410, 415) property values in a configuration file stored in the data store (214).

24. The system of claim 23 wherein the property values include a base universal resource locator value, a file extension value, a format value, a language value, or a voice value.

25. The system of claim 24 wherein the voice application processor is configured to build the universal resource locator of the voice file by concatenating the property values with an identifier parameter included in the new dynamic content generation command (610-650).

26. The system of claim 16 wherein the dynamic content generation script is written in a dynamic markup language, said dynamic markup language being one of Java Server Pages, Practical Extraction and Report Language, Python, or Tool Command Language.

27. The system of claim 16 wherein the voice application processor is configured to receive a dynamic content generation command (510-540) from a voice program written in a scripting language.

28. The system of claim 27 wherein the scripting language is one of voice extensible markup language or speech application language tags.

29. A computer program product comprising a computer readable storage medium storing a dynamic content instruction for generating one or more voice program instructions in a voice script instruction set architecture, the dynamic content instruction (510-540) being part of the voice script instruction set, said computer program product **characterized in that**
the dynamic content instruction includes:
a dynamic content code that identifies the instruction as a dynamic content instruction, the dynamic content instruction being associated with one or more voice program instructions; and
an identifier parameter;
wherein the dynamic content instruction is processed by processing a dynamic content generation script corresponding to the identifier parameter, the dynamic content generation script (600) being a logic file that defines the conditions under which different prompt instructions or grammar instructions may be returned into the voice script (500), and
wherein the processing of the dynamic content generation script (600) comprises processing the dynamic content generation script (600) to generate one or more new dynamic content generation commands (610-650) that are then processed in sequence, wherein the processing of a new dynamic content command (610-650) includes building a corresponding voice program instruction corresponding to each of the new dynamic content commends (610-650) that is returned to the voice script.

30. The computer program product of claim 29 wherein the dynamic content code associates the instruction with a grammar instruction or a prompt instruction.

31. The computer program product of claim 29 wherein building a voice program, instruction includes building a universal resource locator of a voice file and positioning the universal resource locator of the voice file after a voice instruction tag or between two voice instruction tags.

32. The computer program product of claim 31 wherein the voice file is a prompt file or a grammar file.

33. The computer program product of claim 31 wherein building the voice program instruction further includes accessing a block of text from a file corresponding to the identifier parameter and positioning the block of text after the voice instruction tag or between the two voice instruction tags.

34. The computer program product of claim 31 wherein building the universal resource locator of the voice file includes concatenating property values in a predetermined order with the identifier parameter.

35. The computer program product of claim 34 wherein the property values include a base URL value, a file extension value, a format value, a language value, or a voice value.

## Patentansprüche

1. Verfahren (300) zum dynamischen Erzeugen einer Sprachnachricht in einem interaktiven Sprachantwortsystem (106), wobei das Verfahren umfasst:
Verarbeiten eines Sprachscripts (500), das einen oder mehrere dynamische Inhaltserzeugungsbefehle (510 bis 540) umfasst, wobei das Verarbeiten ein Zerlegen eines jeden der dynamischen Inhaltserzeugungsbefehle (510 bis 540) in dem Sprachscript (500) in eine oder mehrere entsprechende Sprachprogrammanweisungen umfasst;
Erzeugen einer dynamischen Sprachnachricht (910) auf Grundlage des verarbeiteten Sprachscripts (900; 1000); und
Präsentieren der dynamischen Sprachnachricht (910),
wobei das Verfahren **dadurch gekennzeichnet ist, dass** das Zerlegen der dynamischen Inhaltserzeugungsbefehle in dem Sprachscript (500) umfasst:
Verarbeiten eines dynamischen Inhaltserzeugungsbefehls (510 bis 540) zum Identifizieren eines dynamischen Inhaltserzeugungsscripts (600) entsprechend dem dynamischen Inhaltserzeugungsbefehl (510 bis 540), wobei das dynamische Inhaltserzeugungsscript (600) eine Logikdatei ist, die die Bedingungen definiert, unter denen verschiedene Aufforderungsanweisungen oder Grammatikanweisungen an das Sprachscript (500) ausgegeben werden können;
dynamisches Verarbeiten (315) des dynamischen Inhaltserzeugungsscripts (600) zum Erzeugen von einem oder mehreren neuen dynamischen Inhaltserzeugungsbefehlen (610 bis 650), die sodann in einer Sequenz bzw. Abfolge verarbeitet werden, wobei das Verarbeiten eines neuen dynamischen Inhaltserzeugungsbefehls (610 bis 650) ein Aufbauen einer entsprechenden Sprachprogrammanweisung entsprechend einem jedem der neuen dynamischen Inhaltsbefehle (610 bis 650), die an das Sprachscript (500) ausgegeben werden, beinhaltet.

2. Verfahren (300) nach Anspruch 1, wobei das Verarbeiten des dynamischen Inhaltserzeugungsbefehls (510 bis 540) ein Zugreifen auf das dynamische Inhaltserzeugungsscript (600) von einem Datenspeicher (214) aus beinhaltet.

3. Verfahren (300) nach Anspruch 1, wobei die Sprachprogrammanweisung eines von einer spracherweiterbaren Markup-Language-Anweisung, einer Speech-Application-Language-Tags-Anweisung, einer Aufforderungsanweisung und einer Grammatikanweisung umfasst.

4. Verfahren (300) nach Anspruch 1, wobei das Aufbauen der Sprachprogrammanweisung entsprechend dem neuen dynamischen Inhaltserzeugungsbefehl (610 bis 650) ein Aufbauen (420, 425) einer URL (Universal Resource Locator) einer Sprachdatei und ein Positionieren der URL der Sprachdatei nach einem Sprachanweisungs-Tag oder zwischen zwei Sprachanweisungs-Tags beinhaltet.

5. Verfahren (300) nach Anspruch 5, wobei die Sprachdatei eine Aufforderungsdatei oder eine Grammatikdatei ist.

6. Verfahren (300) nach Anspruch 4, wobei das Aufbauen der Sprachprogrammanweisung des Weiteren ein Zugreifen (430) auf einen Textblock aus einer Datei entsprechend einem Identifiziererparameter, der in dem neuen dynamischen Inhaltserzeugungsbefehl (610 bis 650) beinhaltet ist, und ein Positionieren des Textblocks nach dem Sprachanweisungs-Tag oder zwischen den beiden Sprachanweisungs-Tags beinhaltet.

7. Verfahren (300) nach Anspruch 4, wobei das Aufbauen der URL der Sprachdatei ein Zugreifen (410, 415) auf Eigenschaftswerte in einer Konfigurationsdatei, die in einem Datenspeicher (214) gespeichert ist, beinhaltet.

8. Verfahren (300) nach Anspruch 7, wobei die Eigenschaftswerte einen Basis-URL-Wert, einen Dateierweiterungswert, einen Formatwert, einen Language-Wert oder einen Sprachwert beinhalten.

9. Verfahren (300) nach Anspruch 7, wobei das Aufbauen der URL ein Verketten der Eigenschaftswerte in einer vorbestimmten Reihenfolge mit einem Identifiziererparameter, der in dem neuen dynamischen Inhaltserzeugungsbefehl (610 bis 650) beinhaltet ist, beinhaltet.

10. Verfahren (300) nach Anspruch 1, wobei das Verarbeiten des dynamischen Inhaltserzeugungsscripts eines von einem Abrufen von Information aus einem Datenspeicher (214) oder einem Zugreifen auf Back-End-Systeme zum Abrufen von Daten, die zum Erzeugen der dynamischen Sprachnachricht verwendet werden, beinhaltet.

11. Verfahren (300) nach Anspruch 1, wobei das dynamische Inhaltserzeugungsscript in einem dynamischen Markup-System geschrieben ist.

12. Verfahren (300) nach Anspruch 11, wobei das dynamische Markup-System Java Server Pages, Practical Extraction and Report Language, Python oder Tool Command Language ist.

13. Verfahren (300) nach Anspruch 1, wobei der dynamische Inhaltserzeugungsbefehl (510 bis 540) in einem in einer Scripting Language geschriebenen Sprachprogramm verwendet wird.

14. Verfahren (300) nach Anspruch 13, wobei die Scripting Language eines von einer spracherweiterbaren Markup-Language oder Speech Application Language Tags ist.

15. Verfahren (300) nach Anspruch 13, wobei das Präsentieren der dynamischen Sprachnachricht ein Abspielen der Sprachnachricht unter Verwendung einer Audioabspielkomponente eines Sprach-Gateways (108; 208) beinhaltet.

16. Interaktives Sprachantwortsystem (106), umfassend:
einen Datenspeicher (214), der ein oder mehrere dynamische Inhaltserzeugungsscripts speichert;
einen Sprachanwendungsprozessor, umfassend:
Mittel zum Verarbeiten eines Sprachscripts (500), das einen oder mehrere dynamische Inhaltserzeugungsbefehle (510 bis 540) umfasst, wobei die Verarbeitung ein Zerlegen eines jeden der dynamischen Inhaltserzeugungsbefehle (510 bis 540) in dem Sprachscript (500) in eine oder mehrere entsprechende Sprachprogrammanweisungen umfasst;
Mittel zum Erzeugen einer dynamischen Sprachnachricht (910) auf Grundlage des verarbeiteten Sprachscripts (900; 1000); und
ein Sprach-Gateway (108; 208), das konfiguriert ist zum Präsentieren der Sprachnachricht (910) gegenüber einem Anwender,
wobei das interaktive Sprachantwortsystem (106) **dadurch gekennzeichnet ist, dass** das Mittel zum Verarbeiten des Sprachscripts (500) ausgelegt ist zum:
Empfangen eines dynamischen Inhaltserzeugungsbefehls (510 bis 540);
Identifizieren eines dynamischen Inhaltserzeugungsscripts (600) entsprechend dem dynamischen Inhaltserzeugungsbefehl (510 bis 540), wobei das dynamische Inhaltserzeugungsscript (600) eine Logikdatei ist, die die Bedingungen definiert, unter denen verschiedene Aufforderungsanweisungen oder Grammatikanweisungen an das Sprachscript (500) ausgegeben werden können;
Abrufen des dynamischen Inhaltserzeugungsscripts aus dem Datenspeicher (214); und
dynamisches Verarbeiten des dynamischen Inhaltserzeugungsscripts (600) zum Erzeugen von einem oder mehreren neuen dynamischen Inhaltserzeugungsbefehlen (610 bis 650), die sodann in einer Sequenz bzw. Abfolge verarbeitet werden, wobei das Verarbeiten eines neuen dynamischen Inhaltserzeugungsbefehls (610 bis 650) ein Aufbauen einer entsprechenden Sprachprogrammanweisung entsprechend einem jeden der neuen dynamischen Inhaltsbefehle (610 bis 650), die an das Sprachscript (500) ausgegeben werden, beinhaltet.

17. System nach Anspruch 16, des Weiteren umfassend ein Back-End-System, das konfiguriert ist zum Bereitstellen von Daten, die von dem Sprachanwendungsprozessor verwendet werden, um die Sprachnachricht (910) zu erzeugen.

18. System nach Anspruch 17, wobei der Sprachanwendungsprozessor konfiguriert ist zum Verarbeiten des dynamischen Inhaltserzeugungsscripts (600) durch Zugreifen auf das Back-End-System zum Abrufen von Daten, die zum Erzeugen der Sprachnachricht (910) verwendet werden.

19. System nach Anspruch 16, wobei die Sprachprogrammanweisung eines von einer spracherweiterbaren Markup-Language-Anweisung, einer Speech-Application-Language-Tags-Anweisung, einer Aufforderungsanweisung und einer Grammatikanweisung umfasst.

20. System nach Anspruch 16, wobei der Sprachanwendungsprozessor konfiguriert ist zum Aufbauen der Sprachprogrammanweisung durch Aufbauen (420, 425) einer URL einer Sprachdatei und Positionieren der URL der Sprachdatei nach einem Sprachanweisungs-Tag oder zwischen zwei Sprachanweisungs-Tags.

21. System nach Anspruch 20, wobei die Sprachdatei eine Aufforderungsdatei oder eine Grammatikdatei ist.

22. System nach Anspruch 21, wobei der Sprachanwendungsprozessor konfiguriert ist zum Aufbauen der Sprachprogrammanweisung ebenfalls durch Zugreifen (430) auf einen Textblock aus einer Datei entsprechend einem ldentifiziererparameter, der in dem neuen dynamischen Inhaltserzeugungsbefehl (610 bis 650) beinhaltet ist, und Positionieren des Textblocks nach dem Sprachanweisungs-Tag oder zwischen den beiden Sprachanweisungs-Tags.

23. System nach Anspruch 20, wobei der Sprachanwendungsprozessor konfiguriert ist zum Aufbauen der URL der Sprachdatei durch Zugreifen (410, 415) auf Eigenschaftswerte in einer Konfigurationsdatei, die in dem Datenspeicher (214) gespeichert ist.

24. System nach Anspruch 23, wobei die Eigenschaftswerte einen Basis-URL-Wert, einen Dateierweiterungswert, einen Formatwert, einen Language-Wert oder einen Sprachwert beinhalten.

25. System nach Anspruch 24, wobei der Sprachanwendungsprozessor konfiguriert ist zum Aufbauen der URL der Sprachdatei durch Verketten der Eigenschaftswerte mit einem Identifiziererparameter, der in dem neuen dynamischen Inhaltserzeugungsbefehl (610 bis 650) beinhaltet ist.

26. System nach Anspruch 16, wobei das dynamische Inhaltserzeugungsscript in einer dynamischen Markup Language geschrieben ist, wobei die dynamische Markup Language eines von Java Server Pages, Practical Extraction and Report Language, Python oder Tool Command Language ist.

27. System nach Anspruch 16, wobei der Sprachanwendungsprozessor konfiguriert ist zum Empfangen eines dynamischen Inhaltserzeugungsbefehls (510 bis 540) von einem in einer Scripting Language geschriebenen Sprachprogramm.

28. System nach Anspruch 27, wobei die Scripting Language eines von einer spracherweiterbaren Markup-Language oder Speech Application Language Tags ist.

29. Computerprogrammerzeugnis, umfassend ein computerlesbares Speichermedium, das eine dynamische Inhaltsanweisung zum Erzeugen von einer oder mehreren Sprachprogrammanweisungen in einer Sprachscriptanweisungssatzarchitektur umfasst, wobei die dynamische Inhaltsanweisung (510 bis 540) ein Teil des Sprachscriptanweisungssatzes ist, wobei das Computerprogrammerzeugnis **dadurch gekennzeichnet ist, dass**:
die dynamische Inhaltsanweisung beinhaltet:
einen dynamischen Inhaltscode, der die Anweisung als dynamische Inhaltsanweisung identifiziert, wobei die dynamische Inhaltsanweisung mit einer oder mehreren Sprachprogrammanweisungen verknüpft ist; und
einen Identifiziererparameter;
wobei die dynamische Inhaltsanweisung durch Verarbeiten eines dynamischen Inhaltserzeugungsscripts entsprechend dem Identifiziererparameter verarbeitet wird, wobei das dynamische Inhaltserzeugungsscript (600) eine Logikdatei ist, die die Bedingungen definiert, unter denen verschiedene Aufforderungsanweisungen oder Grammatikanweisungen an das Sprachscript (500) ausgegeben werden können, und
wobei das Verarbeiten des dynamischen Inhaltserzeugungsscripts (600) ein Verarbeiten des dynamischen Inhaltserzeugungsscripts (600) zum Erzeugen von einem oder mehreren neuen dynamischen Inhaltserzeugungsbefehlen (610 bis 650), die sodann in einer Sequenz bzw. Abfolge verarbeitet werden, umfasst, wobei das Verarbeiten eines neuen dynamischen Inhaltsbefehls (610 bis 650) ein Aufbauen einer entsprechenden Sprachprogrammanweisung entsprechend einem jeden der neuen dynamischen Inhaltsbefehle (610 bis 650), die an das Sprachscript ausgegeben werden, beinhaltet.

30. Computerprogrammerzeugnis nach Anspruch 29, wobei der dynamische Inhaltscode die Anweisung mit einer Grammatikanweisung oder einer Aufforderungsanweisung verknüpft.

31. Computerprogrammerzeugnis nach Anspruch 29, wobei das Aufbauen einer Sprachprogrammanweisung ein Aufbauen einer URL einer Sprachdatei und ein Positionieren der URL der Sprachdatei nach einem Sprachanweisungs-Tag oder zwischen zwei Sprachanweisungs-Tags beinhaltet.

32. Computerprogrammerzeugnis nach Anspruch 31, wobei die Sprachdatei eine Aufforderungsdatei oder eine Grammatikdatei ist.

33. Computerprogrammerzeugnis nach Anspruch 31, wobei das Aufbauen der Sprachprogrammanweisung des Weiteren ein Zugreifen auf einen Textblock aus einer Datei entsprechend dem Identifiziererparameter und ein Positionieren des Textblocks nach dem Sprachanweisungs-Tag oder zwischen zwei Sprachanweisungs-Tags beinhaltet.

34. Computerprogrammerzeugnis nach Anspruch 31, wobei das Aufbauen der URL der Sprachdatei ein Verketten von Eigenschaftswerten in einer vorbestimmten Reihenfolge mit dem Identifiziererparameter beinhaltet.

35. Erzeugnis nach Anspruch 34, wobei die Eigenschaftswerte einen Basis-URL-Wert, einen Dateierweiterungswert, einen Formatwert, einen Language-Wert oder einen Sprachwert beinhalten.

## Revendications

1. Procédé (300) de génération dynamique d'un message vocal dans un système de réponse vocale interactive (106), le procédé comprenant :
traiter un script vocal (500) comprenant une ou plusieurs commandes de génération de contenu dynamique (510 à 540), le traitement comprenant la résolution de chacune des commandes de génération de contenu dynamique (510 à 540) dans le script vocal (500) en une ou plusieurs instructions de programme vocal correspondantes ;
générer un message vocal dynamique (910) en fonction du script vocal traité (900 ; 1000) ; et
présenter le message vocal dynamique (910),
ledit procédé étant **caractérisé en ce que** la résolution des commandes de génération de contenu dynamique dans le script vocal (500) comprend
traiter une commande de génération de contenu dynamique (510 à 540) pour identifier un script de génération de contenu dynamique (600) correspondant à la commande de génération de contenu dynamique (510 à 540), le script de génération de contenu dynamique (600) étant un fichier logique qui définit les conditions dans lesquelles différentes instructions d'invite ou instructions de grammaire peuvent être renvoyées dans le script vocal (500) ;
traiter dynamiquement (315) le script de génération de contenu dynamique (600) pour générer une ou plusieurs nouvelles commandes de génération de contenu dynamique (610 à 650) qui sont ensuite traitées en séquence, dans lequel le traitement d'une nouvelle commande de génération de contenu dynamique (610 à 650) inclut la construction d'une instruction de programme vocal correspondante correspondant à chacune des nouvelles commandes de contenu dynamique (610 à 650) qui sont renvoyées au script vocal (500).

2. Procédé (300) selon la revendication 1, dans lequel le traitement de la commande de génération de contenu dynamique (510 à 540) inclut l'accès au script de génération de contenu dynamique (600) depuis un magasin de données (214).

3. Procédé (300) selon la revendication 1, dans lequel l'instruction de programme vocal comprend une instruction parmi une instruction de langage XML vocale, une instruction de balises de langage d'application vocale, une instruction d'invite et une instruction de grammaire.

4. Procédé (300) selon la revendication 1, dans lequel la construction de l'instruction de programme vocal correspondant à la nouvelle commande de génération de contenu dynamique (610 à 650) inclut la construction (420, 425) d'un localisateur de ressources universel d'un fichier vocal et le positionnement du localisateur de ressources universel du fichier vocal après une balise d'instruction vocale ou entre deux balises d'instruction vocale.

5. Procédé (300) selon la revendication 5, dans lequel le fichier vocal est un fichier d'invite ou un fichier de grammaire.

6. Procédé (300) selon la revendication 4, dans lequel la construction de l'instruction de programme vocal inclut en outre l'accès (430) à un bloc de texte depuis un fichier correspondant à un paramètre d'identifiant inclus dans la nouvelle commande de génération de contenu dynamique (610 à 650) et le positionnement du bloc de texte après la balise d'instruction vocale ou entre les deux balises d'instruction vocale.

7. Procédé (300) selon la revendication 4, dans lequel la construction du localisateur de ressources universel du fichier vocal inclut l'accès (410, 415) à des valeurs de propriété dans un fichier de configuration stocké dans un magasin de données (214).

8. Procédé (300) selon la revendication 7, dans lequel les valeurs de propriété incluent une valeur de localisateur de ressources universel de base, une valeur d'extension de fichier, une valeur de format, une valeur de langage ou une valeur vocale.

9. Procédé (300) selon la revendication 7, dans lequel la construction du localisateur de ressources universel inclut la concaténation des valeurs de propriété dans un ordre prédéterminé avec un paramètre d'identifiant inclus dans la nouvelle commande de génération de contenu dynamique (610 à 650).

10. Procédé (300) selon la revendication 1, dans lequel le traitement du script de génération de contenu dynamique inclut une action parmi la récupération d'informations d'un magasin de données (214) ou l'accès à des systèmes terminaux pour récupérer des données utilisées pour générer le message vocal dynamique.

11. Procédé (300) selon la revendication 1, dans lequel le script de génération de contenu dynamique est écrit dans un système de marquage dynamique.

12. Procédé (300) selon la revendication 11, dans lequel le système de marquage dynamique est le Java Server Pages, le langage Perl, Python ou le Tool Command Language.

13. Procédé (300) selon la revendication 1, dans lequel la commande de génération de contenu dynamique (510 à 540) est utilisée dans un programme vocal écrit dans un langage de script.

14. Procédé (300) selon la revendication 13, dans lequel le langage de script est un langage parmi le langage XML vocal ou des balises de langage d'application vocale.

15. Procédé (300) selon la revendication 13, dans lequel la présentation du message vocal dynamique inclut la lecture du message vocal en utilisant un composant de reproduction audio d'une passerelle vocale (108 ; 208).

16. Système de réponse vocale interactive (106) comprenant :
un magasin de données (214) qui stocke un ou plusieurs scripts de génération de contenu dynamique ;
un processeur d'application vocale comprenant :
un moyen adapté à traiter un script vocal (500) comprenant une ou plusieurs commandes de génération de contenu dynamique (510 à 540), le traitement comprenant la résolution de chacune des commandes de génération de contenu dynamique (510 à 540) dans le script vocal (500) en une ou plusieurs instructions de programme vocal correspondantes ;
un moyen adapté à générer un message vocal dynamique (910) en fonction du script vocal traité (900 ; 1000) ; et
une passerelle vocale (108 ; 208) configurée pour présenter le message vocal (910) à un utilisateur,
ledit système de réponse vocale interactive (106) est **caractérisé en ce que** le moyen adapté à traiter le script vocal (500) est adapté à
recevoir une commande de génération de contenu dynamique (510 à 540) ;
identifier un script de génération de contenu dynamique (600) correspondant à la commande de génération de contenu dynamique (510 à 540), le script de génération de contenu dynamique (600) étant un fichier logique qui définit les conditions dans lesquelles différentes instructions d'invite ou instructions de grammaire peuvent être renvoyées dans le script vocal (500) ;
récupérer le script de génération de contenu dynamique du magasin de données (214) ; et
traiter dynamiquement le script de génération de contenu dynamique (600) pour générer une ou plusieurs nouvelles commandes de génération de contenu dynamique (610 à 650) qui sont ensuite traitées en séquence, dans lequel le traitement d'une nouvelle commande de génération de contenu dynamique (610 à 650) inclut la construction d'une instruction de programme vocal correspondante correspondant à chacune des nouvelles commandes de contenu dynamique (610 à 650) qui est renvoyée au script vocal (500).

17. Système selon la revendication 16, comprenant en outre un système terminal configuré pour fournir des données utilisées par le processeur d'application vocale afin de générer le message vocal (910).

18. Système selon la revendication 17, dans lequel le processeur d'application vocale est configuré pour traiter le script de génération de contenu dynamique (600) en accédant au système terminal pour récupérer des données utilisées pour générer le message vocal (910).

19. Système selon la revendication 16, dans lequel l'instruction de programme vocal est une instruction parmi une instruction de langage XML vocale, une instruction de balises de langage d'application vocale, une instruction d'invite et une instruction de grammaire.

20. Système selon la revendication 16, dans lequel le processeur d'application vocale est configuré pour construire l'instruction de programme vocal en construisant (420, 425) un localisateur de ressources universel d'un fichier vocal et positionnant le localisateur de ressources universel du fichier vocal après une balise d'instruction vocale ou entre deux balises d'instruction vocale.

21. Système selon la revendication 20, dans lequel le fichier vocal est un fichier d'invite ou un fichier de grammaire.

22. Système selon la revendication 21, dans lequel le processeur d'application vocale est configuré pour construire l'instruction de programme vocal en accédant (430) également à un bloc de texte depuis un fichier correspondant à un paramètre d'identifiant inclus dans la nouvelle commande de génération de contenu dynamique (610 à 650) et positionnant le bloc de texte après la balise d'instruction vocale ou entre les deux balises d'instruction vocale.

23. Système selon la revendication 20, dans lequel le processeur d'application vocale est configuré pour construire le localisateur de ressources universel du fichier vocal en accédant (410, 415) à des valeurs de propriété dans un fichier de configuration stocké dans le magasin de données (214).

24. Système selon la revendication 23, dans lequel les valeurs de propriété incluent une valeur de localisateur de ressources universel de base, une valeur d'extension de fichier, une valeur de format, une valeur de langage ou une valeur vocale.

25. Système selon la revendication 24, dans lequel le processeur d'application vocale est configuré pour construire le localisateur de ressources universel du fichier vocal en concaténant les valeurs de propriété avec un paramètre d'identifiant inclus dans la nouvelle commande de génération de contenu dynamique (610 à 650).

26. Système selon la revendication 16, dans lequel le script de génération de contenu dynamique est écrit dans un langage de marquage dynamique, ledit langage de marquage dynamique étant un langage parmi le Java Server Pages, le langage Perl, Python ou le Tool Command Language.

27. Système selon la revendication 16, dans lequel le processeur d'application vocale est configuré pour recevoir une commande de génération de contenu dynamique (510 à 540) d'un programme vocal écrit dans un langage de script.

28. Système selon la revendication 27, dans lequel le langage de script est un langage parmi le langage XML vocal ou des balises de langage d'application vocale.

29. Produit de programme informatique comprenant un support de stockage lisible par ordinateur stockant une instruction de contenu dynamique pour générer une ou plusieurs instructions de programme vocal dans une architecture d'ensemble d'instructions de script vocal, l'instruction de contenu dynamique (510 à 540) faisant partie de l'ensemble d'instructions de script vocal, ledit produit de programme informatique étant **caractérisé en ce que**
l'instruction de contenu dynamique inclut :
un code de contenu dynamique qui identifie l'instruction en tant qu'instruction de contenu dynamique, l'instruction de contenu dynamique étant associée à une ou plusieurs instructions de programme vocal ; et
un paramètre d'identifiant ;
dans lequel l'instruction de contenu dynamique est traitée en traitant un script de génération de contenu dynamique correspondant au paramètre d'identifiant, le script de génération de contenu dynamique (600) étant un fichier logique qui définit les conditions dans lesquelles différentes instructions d'invite ou instructions de grammaire peuvent être renvoyées dans le script vocal (500), et
dans lequel le traitement du script de génération de contenu dynamique (600) comprend le traitement du script de génération de contenu dynamique (600) pour générer une ou plusieurs nouvelles commandes de génération de contenu dynamique (610 à 650) qui sont ensuite traitées en séquence, dans lequel le traitement d'une nouvelle commande de contenu dynamique (610 à 650) inclut la construction d'une instruction de programme vocal correspondante correspondant à chacune des nouvelles commandes de contenu dynamique (610 à 650) qui est renvoyée au script vocal.

30. Produit de programme informatique selon la revendication 29, dans lequel le code de contenu dynamique associe l'instruction à une instruction de grammaire ou une instruction d'invite.

31. Produit de programme informatique selon la revendication 29, dans lequel la construction d'une instruction de programme vocal inclut la construction d'un localisateur de ressources universel d'un fichier vocal et le positionnement du localisateur de ressources universel du fichier vocal après une balise d'instruction vocale ou entre deux balises d'instruction vocale.

32. Produit de programme informatique selon la revendication 31, dans lequel le fichier vocal est un fichier d'invite ou un fichier de grammaire.

33. Produit de programme informatique selon la revendication 31, dans lequel la construction de l'instruction de programme vocal inclut en outre l'accès à un bloc de texte depuis un fichier correspondant au paramètre d'identifiant et le positionnement du bloc de texte après la balise d'instruction vocale ou entre les deux balises d'instruction vocale.

34. Produit de programme informatique selon la revendication 31, dans lequel la construction du localisateur de ressources universel du fichier vocal inclut la concaténation de valeurs de propriété dans un ordre prédéterminé avec le paramètre d'identifiant.

35. Produit de programme informatique selon la revendication 34, dans lequel les valeurs de propriété incluent une valeur d'URL de base, une valeur d'extension de fichier, une valeur de format, une valeur de langage ou une valeur vocale.
